# EUROPEAN PATENT SPECIFICATION

(11) **EP 3 588 738 B1**
(45) Date of publication and mention of the grant of the patent: **16.03.2022**
(21) Application number: 18465539.7
(22) Date of filing: 21.06.2018
(51) Int. Cl.: H01F 38/14, H02J 50/70, H02J 50/10, H02J 7/00, H01F 27/36

(54) **FILTER IN A WIRELESS CHARGER FOR USE IN A VEHICLE, WIRELESS CHARGER AND VEHICLE**
FILTER IN EINEM DRAHTLOSEN LADEGERÄT ZUR VERWENDUNG IN EINEM FAHRZEUG, DRAHTLOSES LADEGERÄT UND FAHRZEUG
FILTRE DANS UN CHARGEUR SANS FIL DESTINÉ À ÊTRE UTILISÉ DANS UN VÉHICULE, CHARGEUR SANS FIL ET VÉHICULE

(43) Date of publication of application: 01.01.2020
(73) Proprietor: Continental Automotive GmbH, 30165 Hannover (DE)
(72) Inventor: Craciun, Serban, 300687 Timisoara (RO); Ionescu, Ioana Sabina, 331042 Hunedoara (RO)
(74) Representative: Continental Corporation

(56) References cited:
- WO-A1-2017/026689
- JP-A- 2012 134 374
- US-A1- 2014 070 763
- US-A1- 2018 166 921

## Description

The present invention relates to a filter for filtering an electric field in a wireless charger for use in a vehicle, a wireless charger and a vehicle.

US 2014/070763 A1 concerns a wireless charger, preventing AM radio interferences when a wireless charger is used in a vehicle. In particular said document discloses a wireless charger for use in a vehicle, comprising a filter for filtering an electric field in a wireless charger for use in a vehicle, comprising: a first metallic filter structure , arranged in a first metal layer of a printed circuit board and comprising multiple slits, configured to filter an electric field generated by a charging coil at the wireless charger arranged below the printed circuit board.

US 2018/166921 A1 concerns having a substrate configured to facilitate through-metal energy transfer via near field magnetic coupling (NFC). Said document discloses in particular various opening configurations including multiple radial slits that alter the path of the eddy current on the surface of an electrically conductive material.

WO 2017/026689 A1 concerns wireless charging. In particular said document discloses a temperature sensor onto a shield member to determine the heat generation and act against it.

JP 2012 134374 A concerns wireless charging of a car from the ground.

Conventional wireless charger base stations are typically constituted by a charging coil and electronics, which energize the coil. Especially in the automotive domain, additionally temperature sensors may be used to monitor a temperature of the charger.

There may be a desire to improve the temperature measurement of a wireless charger.

According to an embodiment, a wireless charger comprising a filter for filtering an electric field in a wireless charger for use in a vehicle is provided. The filter comprises a first metallic filter structure, that is arranged in a first metal layer of a printed circuit board and comprises multiple radial slits. The first filter structure is configured to filter an electric field that is generated by a charging coil at the wireless charger and is arranged below the printed circuit board. The filter comprises further a temperature sensor that is configured to determine a temperature of a surface of the wireless charger; wherein the temperature sensor is thermally coupled to the metallic filter structure and wherein the temperature sensor is arranged outside the radial slits.

The wireless charger is a device that holds a mobile phone and charges the mobile phone wirelessly using electromagnetic induction. The mobile phone and the coil are separated by a housing, on which the mobile phone is placed. The coil produces a magnetic field in the wireless charger that causes the electromagnetic induction in the mobile phone. As the coil produces also an electric field that is interfering with the mobile phone, the field is shielded by a metallic filter that is arranged between the housing and the phone. The filter may be realized as a metallic structure on a PCB copper layer. The shape of the filter may be in a form of a thin solid outer ring of copper adjacent and both electrically and thermally connected to a broad inner ring of copper wherein the inner ring comprises multiple radial narrow slits. Such a structure shields the electrical field and lets the magnetic field pass but also ensures the thermal conductivity. Furthermore, eddy currents are impeded by the slits.

The heat which produced by the mobile phone at the surface of the charger is distributed over the filter. This allows placing the temperature sensors at the outer edge of the filter, distant from the coil and thermally coupled to the filter. In this way the direct, local influence of the self-heating of the coil can be reduced significantly. Furthermore, the thermal distribution can be calculated.

According to a further embodiment, the filter structure has a circular shape and the circular shape is obtained by dividing the circular structure into one or more structure sections. In this way separate structure sections are generated with gaps in-between that avoid eddy currents.

According to a further embodiment, each of the structure sections comprise a temperature sensor. As there are gaps between the divided structures, these metallic structures are thermally disconnected from each other. Thus, each temperature sensor can measure a temperature independently, and a more accurate measurement may be provided. E.g., if there is a higher temperature on one side of the charger surface, the heat is not distributed on the complete structure but is detected more precise near the heat source and the location of the heat source may be determined to a certain extent.

According to a further embodiment, each the temperature sensors is arranged at the outer edge of the first metal layer on an axis of symmetry of the respective structure section. Mounting the temperature sensors at the outer edge of a section reduces the local influence of the self-heat of the coil on the measurement. Preferably, the sensors are mounted along the symmetry axis of the respective section.

According to a further embodiment, the filter comprises a second metallic filter structure, arranged in a second metal layer of the printed circuit board for conducting the heat on the top and the bottom side of the filter.

According to a further embodiment, the first metallic layer and the second metallic layer have the same shape and are thermally connected by a plurality of vias by which the heat of the top surface is conducted to the bottom first metallic layer.

According to a further embodiment, the filter is connected to electrical ground in order to have a well-defined potential and to derivate all arising currents and voltages to ground so that the filter can operate properly without side-effects.

According to an embodiment, the wireless charger for use in a vehicle comprises a wireless coil for charging a mobile phone between a top printed circuit board PCB and a bottom PCB; and a housing. The top PCB comprises as described above a filter for filtering an electric field and a temperature sensor that is configured to determine a temperature of a surface of the wireless charger; wherein the temperature sensor is thermally coupled to the metallic filter structure and arranged outside the radial slits. Due to the thermal coupling outside the radial slits, the temperature sensors of the wireless charger can detect the temperature of the charger surface that is distributed over the filter structure.

According to a further embodiment, the top PCB of the wireless charger for use in a vehicle further comprises antennas and the bottom PCB comprises electronics to link the mobile phone to the wireless charger. This means that the functionalities of the wireless charger are not limited to charging the mobile phone. The wireless charger may also serve as a type of data station and it may couple via, e.g., further equalizing and amplifying equipment the mobile phone to an external antenna of a vehicle.

According to an embodiment, a vehicle is provided comprising a wireless charger for use in a vehicle.

The accompanying figures illustrate embodiments of the invention. The invention is defined by the features of the independent claim 1. Preferred embodiments are defined in the dependent claims.
- Fig. 1: shows a filter for filtering an electric field in a wireless charger for use in a vehicle,
- Fig. 2: shows a wireless charger for use in a vehicle,
- Fig. 3: shows a filter according to an embodiment,
- Fig. 4: shows a wireless charger for use in a vehicle according to an embodiment,
- Fig. 5: shows a vehicle comprising a wireless charger according to an embodiment.

An exemplary structure of a wireless charger is that there is in bottom-up order a main PCB (printed circuit board) with electronics at the base, the charging coil in the middle and a further PCB placed at the top. The top PCB contains the filter for the electrical field, the temperature sensors and furthermore different antennas for, e.g., GSM or NFC.

The typical filter is arranged on the PCB and has a circular structure with a plurality of radial fins or tooth. In the gaps between the fins, separated from them, typically two temperature sensors are placed. This means, that the sensors are placed very near to the charging coil that is located below the filter. This may lead to a limited accuracy of detection of the surface temperature due to the self-heating of the charging coil. Therefore, with such an arrangement it may be difficult to measure and predict the temperature over the entire surface of the charger.

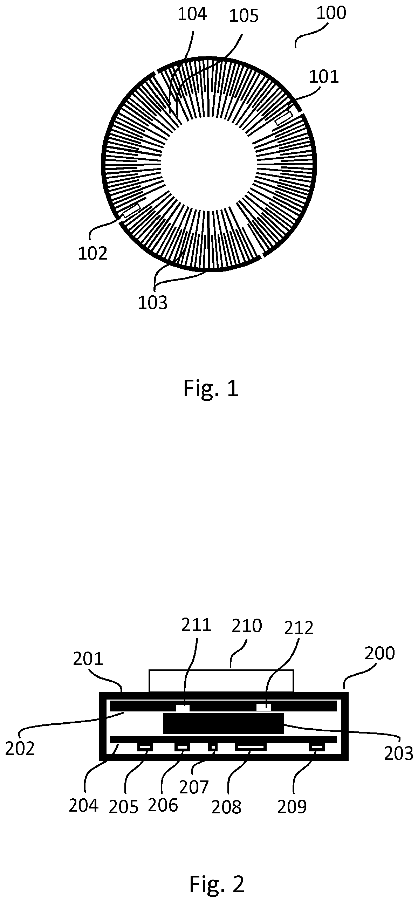

Fig. 1 shows in a top view a typical filter 100 for filtering an electric field in a wireless charger for use in a vehicle. The filter may be realized as a structure 103 on a metal layer on a PCB inside the wireless charger and shields the mobile phone from the electrical field generated by a charging coil. A typical arrangement is explained below in more detail by means of Fig. 2. The filter structure 103 is typically a type of radial fins 104 with slits 105 between the fins 104. In order to protect the mobile phone from overheating, temperature sensors 101 and 102 are used. Typically, they are placed in the slits 105 between the fins 104.

Fig. 2 shows a typical wireless charger 200 for use in a vehicle and in side view an arrangement of the top PCB 202 and other components inside the charger 200. The wireless charger 200 comprises a housing 201 on top of which a mobile phone 210 may be placed. Proceeding top-down, the first element inside the wireless charger 200 is the top PCB 202 that comprises the filter 100 and other components as, e.g., GSM and NFC antennas. Below the top PCB 202 follows the charging coil 203, so that the filter 100 is situated between the charging coil 302 and the mobile phone 210. Below the charging coil 203, the bottom PCB 204 is arranged comprising electronic components 205 ... 209 for energizing the charging coil 203 and for providing further functionality to the wireless charger 200. The temperature sensors 211 and 212 are arranged in the slits of the filter 100 on the top PCB 202 directly above the charging coil 203.

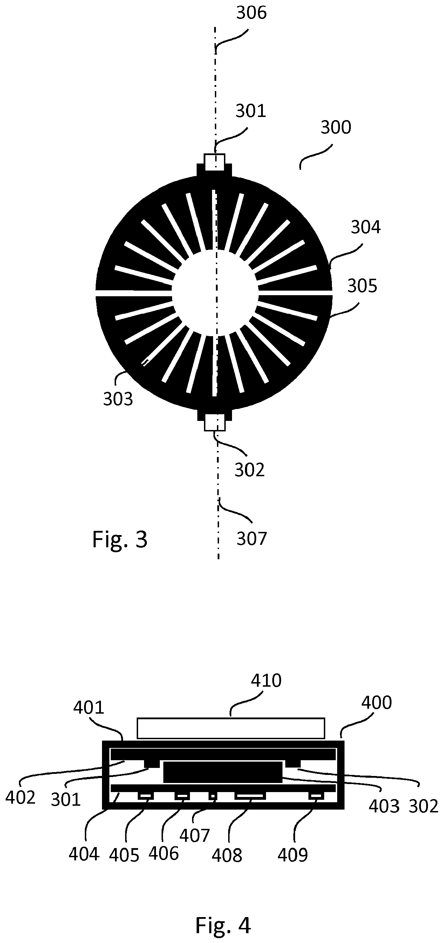

Fig. 3 shows a top view of a filter 300 for filtering an electric field in a wireless charger 400 for use in a vehicle 500 according to an embodiment. The filter 300 comprises a first metallic filter structure 304, 305, arranged in a first metal layer of a printed circuit board 402 and comprises multiple radial slits 303 and temperature sensors 301 and 302 that are thermally coupled to the filter 300 and located outside the slits 303. The temperature sensors 301, 302 are arranged at the outer edge of the filter 300. The structure of the filter 300 may have a circular shape and the circular shape may be obtained by dividing the circular structure in two or more sections, e.g. into the two structure sections 304 and 305 as shown in Fig. 3. A first temperature sensor 301 may then be attached to the first structure section 304 and a second temperature sensor 303 may then be attached to the second structure section 305. The temperature sensors may be arranged at the structure sections at the outer edge and on the axis of symmetry of the sections. In Fig. 3 temperature sensor 301 is attached to the structure section 304 on the symmetry axis 306 and temperature sensor 302 is attached to the structure section 305 on the symmetry axis 307.

Fig. 4 shows a wireless charger 400 for use in a vehicle according to an embodiment. The wireless charger comprises a housing 401 on top of which a mobile phone 410 may be placed. Proceeding top-down, the first element inside the wireless charger 400 is the top PCB 402 that comprises the filter 300 and other components as, e.g., GSM and NFC antennas. Below the top PCB 402 follows the charging coil 403, so that the filter 300 is situated between the charging coil 403 and the mobile phone 410. Below the charging coil 403, the bottom PCB 404 is arranged comprising electronic components 405 ... 409 for energizing the charging coil 403 and for providing further functionality to the wireless charger 400. The temperature sensors 301 and 302 are arranged outside the slits 303 of the filter 300 on the top PCB 402, distant from the charging coil 403. The thermal coupling that enables such a distant arrangement of the temperature sensors 301, 302 is achieved by using the metallic structure 304, 305 of the filter 300 for the electric field to conduct the heat from the top surface of the housing 401 to the sensors 301, 302. The PCB 402 may be dual-layered, so that a first metallic structure is on the bottom side of the PCB 402 and a second metallic structure is on the top side of the PCB 402. The two metallic structures may be connected by multiple vias with each other. Therefore, the heat from the mobile phone 410 is absorbed first by top surface of the housing 401, then by the upper metallic structure of the top PCB 402 and is then conducted through the vias to the lower metallic structure of the top PCB 402 and finally reaches the temperature sensors 301 and 302.

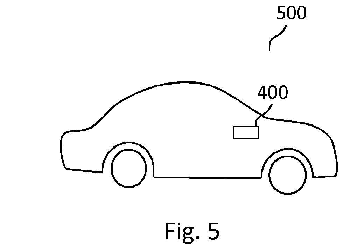

Fig. 5 shows a vehicle 500 comprising a wireless charger 400 according to an embodiment.

## Claims

1. Wireless charger (400) for use in a vehicle (500), comprising a filter (300) for filtering an electric field in a wireless charger (400) for use in a vehicle (500),
***characterized by comprising:***
a first metallic filter structure (304, 305), arranged in a first metal layer of a printed circuit board (402) and comprising multiple radial slits (303), configured to filter an electric field generated by a charging coil (403) at the wireless charger (400) arranged below the printed circuit board (402);
a temperature sensor (301), (302) configured to determine a temperature of a surface of the wireless charger (400);
wherein the temperature sensor (301), (302) is thermally coupled to the metallic filter structure (304, 305) and arranged outside the radial slits (303).

2. Wireless charger according to claim 1 wherein the filter structure (304, 305) has a circular shape and the circular shape is obtained by dividing the circular structure (304, 305) into one or more structure sections (304 and 305 resp.).

3. Wireless charger according to claim 2 wherein each of the structure sections (304, 305) comprises a temperature sensor (301, 302).

4. Wireless charger according to claim 3, wherein each of the temperature sensors (301, 302) is arranged at the outer edge of first metal layer on an axis of symmetry (306, 307) of the respective structure section (304, 305).

5. Wireless charger according to one of the previous claims, wherein the filter (300) comprises a second metallic filter structure, arranged in a second metal layer of the printed circuit board (402).

6. Wireless charger according to claim 5, wherein the first metallic layer and the second metallic layer have the same shape and are thermally connected by a plurality of vias.

7. Wireless charger according to one of the previous claims, wherein the filter (300) is connected to electrical ground.

8. Wireless charger (400) for use in a vehicle (500) according to claims 1 to 7, comprising
the charging coil(403) being a wireless charging coil (403) for charging a mobile phone (410) between the first metal layer of a printable circuit board PCB (402) being a top PCB (402) and a bottom PCB (404); and
a housing (401), wherein
the top PCB (401) comprises the filter (300) for filtering an electric field.

9. Wireless charger (400) for use in a vehicle (500) according to claim 8,
wherein the top PCB (401) further comprises antennas and the bottom PCB (404) comprises electronics (405, 406, 407, 408, 409), to link the mobile phone (410) to the wireless charger (400) .

10. Vehicle (500)
***characterized by*** comprising a wireless charger (400) according to claim 8 or 9.

## Patentansprüche

1. Drahtloses Ladegerät (400) zur Verwendung in einem Fahrzeug (500),
umfassend einen Filter (300) zum Filtern eines elektrischen Felds in einem drahtlose Ladegerät (400) zur Verwendung in einem Fahrzeug (500),
***gekennzeichnet dadurch, dass es umfasst:***
eine erste metallische Filterstruktur (304, 305), angeordnet in einer ersten Metallschicht einer Leiterplatte (402) und umfassend mehrere radiale Schlitze (303), ausgelegt zum Filtern eines elektrischen Felds, erzeugt durch eine Ladespule (403), an dem drahtlosen Ladegerät (400), angeordnet unter der Leiterplatte (402);
einen Temperatursensor (301), (302), ausgelegt zum Bestimmen einer Temperatur einer Oberfläche des drahtlosen Ladegeräts (400);
wobei der Temperatursensor (301), (302) thermisch an die metallische Filterstruktur (304, 305) gekoppelt und außerhalb der radialen Schlitze (303) angeordnet ist.

2. Drahtloses Ladegerät nach Anspruch 1, wobei die Filterstruktur (304, 305) eine kreisförmige Gestalt aufweist und die kreisförmige Gestalt erhalten wird durch Unterteilung der kreisförmigen Struktur (304, 305) in einen oder mehrere Strukturabschnitte (304 beziehungsweise 305).

3. Drahtloses Ladegerät nach Anspruch 2, wobei jeder der Strukturabschnitte (304, 305) einen Temperatursensor (301, 302) umfasst.

4. Drahtloses Ladegerät nach Anspruch 3, wobei jeder der Temperatursensoren (301, 302) an dem äußeren Rand der ersten Metallschicht auf einer Symmetrieachse (306, 307) des jeweiligen Strukturabschnitts (304, 305) angeordnet ist.

5. Drahtloses Ladegerät nach einem der vorhergehenden Ansprüche, wobei der Filter (300) eine zweite metallische Filterstruktur umfasst, angeordnet in einer zweiten Metallschicht der Leiterplatte (402).

6. Drahtloses Ladegerät nach Anspruch 5, wobei die erste metallische Schicht und die zweite metallische Schicht die gleich Gestalt aufweisen und durch mehrere Vias thermisch verbunden sind.

7. Drahtloses Ladegerät nach einem der vorhergehenden Ansprüche, wobei der Filter (300) mit elektrischer Masse verbunden ist.

8. Drahtloses Ladegerät (400) zur Verwendung in einem Fahrzeug (500) nach Ansprüche 1 bis 7,
umfassend
die Ladespule (403), die eine drahtlose Ladespule (403) ist zum Laden eines Mobiltelefons (410) zwischen der ersten Metallschicht einer Leiterplatte PCB (402), die eine obere PCB (402) ist, und einer unteren PCB (404); und
ein Gehäuse (401), wobei
die obere PCB (401) den Filter (300) zum Filtern eines elektrischen Felds umfasst.

9. Drahtloses Ladegerät (400) zur Verwendung in einem Fahrzeug (500) nach Anspruch 8,
wobei die obere PCB (401) weiter Antennen umfasst und die untere PCB (404) Elektroniken (405, 406, 407, 408, 409) umfasst, zum Verbinden des Mobiltelefons (410) mit dem drahtlosen Ladegerät (400).

10. Fahrzeug (500)
***dadurch* gekennzeichnet, *dass*** es ein drahtloses Ladegerät (400) nach Anspruch 8 oder 9 umfasst.

## Revendications

1. Chargeur sans fil (400) destiné à être utilisé dans un véhicule (500), comprenant un filtre (300) destiné à filtrer un champ électrique dans un chargeur sans fil (400) destiné à être utilisé dans un véhicule (500),
***caractérisé en ce qu'il comprend* :**
une première structure de filtre métallique (304, 305), agencée dans une première couche de métal d'une carte de circuit imprimé (402) et comprenant de multiples fentes radiales (303), configurée pour filtrer un champ électrique généré par une bobine de charge (403) au niveau du chargeur sans fil (400) agencée sous la carte de circuit imprimé (402) ;
un capteur de température (301), (302) configuré pour déterminer une température d'une surface du chargeur sans fil (400) ;
le capteur de température (301), (302) étant couplé thermiquement à la structure de filtre métallique (304, 305) et agencé en dehors des fentes radiales (303).

2. Chargeur sans fil selon la revendication 1, dans lequel la structure de filtre (304, 305) est pourvue d'une forme circulaire et la forme circulaire est obtenue par division de la structure circulaire (304, 305) en un ou plusieurs segments de structure (304 et 305 resp.).

3. Chargeur sans fil selon la revendication 2, dans lequel chacun des segments de structure (304, 305) comprend un capteur de température (301, 302).

4. Chargeur sans fil selon la revendication 3, dans lequel chacun des capteurs de température (301, 302) est agencé au niveau du bord extérieur de la première couche de métal sur un axe de symétrie (306, 307) du segment de structure respectif (304, 305).

5. Chargeur sans fil selon l'une des revendications précédentes, dans lequel le filtre (300) comprend une deuxième structure de filtre métallique, agencée dans une deuxième couche de métal de la carte de circuit imprimé (402) .

6. Chargeur sans fil selon la revendication 5, dans lequel la première couche métallique et la deuxième couche métallique sont pourvues de la même forme et sont couplées thermiquement par une pluralité de vias.

7. Chargeur sans fil selon l'une des revendications précédentes, dans lequel le filtre (300) est connecté à une masse électrique.

8. Chargeur sans fil (400) destiné à être utilisé dans un véhicule (500) selon les revendications 1 à 7, comprenant
la bobine de charge (403) consistant en une bobine de charge sans fil (403) destinée à charger un téléphone mobile (410) entre la première couche de métal d'une carte de circuit imprimé, PCB, (402) consistant en une PCB de dessus (402) et une PCB de dessous (404) ; et
un boîtier (401),
la PCB de dessus (401) comprenant le filtre (300) destiné à filtrer un champ électrique.

9. Chargeur sans fil (400) destiné à être utilisé dans un véhicule (500) selon la revendication 8, dans lequel la PCB de dessus (401) comprend en outre des antennes et la PCB de dessous (404) comprend des composants électroniques (405, 406, 407, 408, 409) pour relier le téléphone mobile (410) au chargeur sans fil (400).

10. Véhicule (500),
***caractérisé en ce qu*'**il comprend un chargeur sans fil (400) selon la revendication 8 ou 9.
